# EUROPEAN PATENT SPECIFICATION

(11) **EP 3 643 692 B1**
(45) Date of publication and mention of the grant of the patent: **11.11.2020**
(21) Application number: 19204356.0
(22) Date of filing: 21.10.2019
(51) Int. Cl.: C04B 11/26, C04B 28/14

(54) **A RECYCLING METHOD OF DIHYDRATE GYPSUM FROM WASTE GYPSUM BOARDS**
EIN RECYCLINGVERFAHREN VON DIHYDRATGIPS AUS ABFALLGIPSPLATTEN
PROCEDE DE RECYCLAGE DE GYPSE DE DIHYDRATE A PARTIR DE PANNEAUX DE GYPSE DE DECHETS

(30) Priority: 23.10.2018 JP 2018199095
(43) Date of publication of application: 29.04.2020
(73) Proprietor: Tokuyama Corporation, Shunan-city, Yamaguchi 745-8648 (JP)
(72) Inventor: HIRANAKA, Shingo, Yamaguchi, 7458648 (JP); MATSUO, Kentaro, Yamaguchi, 7458648 (JP); KATAOKA, Makoto, Yamaguchi, 7458648 (JP)
(74) Representative: Kuhnen & Wacker Patent- und Rechtsanwaltsbüro PartG mbB

(56) References cited:
- AU-B2- 447 777
- JP-A- 2017 095 287
- US-A- 3 415 910

## Description

### Field of the Invention

The present invention relates to a recycling method of dihydrate gypsum from waste gypsum boards.

### Background Art

The present inventors and others have succeeded in commercially recycling dihydrate gypsum from waste gypsum boards (Patent Documents 1-3). Patent document 1 (JP 2010-13304 A) discloses to pulverize and then to calcine waste gypsum boards, to further pulverize the calcined gypsum more finely, and to mix the finely powdered gypsum with water. The slurry of water and the gypsum is cured to crystalize gypsum particles. Patent document 1 discloses the fine pulverization makes the average particle size of the crystalized gypsum particles larger.

Patent Document 2 (WO 2014/141926 A) discloses to warm the inlet of the mixing tank containing water for gypsum granules such that scales resultant from the reaction of gypsum and water vapor do not clog the inlet. The temperature referred to in the document is that of the inlet itself and differs from the temperature of the gypsum granules.

Patent Document 3 (JP 6 336 385 B) discloses a structure of the mixing tank for mixing gypsum granules with water that is configured to prevent the inclusion of surrounding air into the slurry.

### Prior Art Document List

### Patent Document List

Patent document 1: JP 2010-13304 A;
Patent document 2: WO 2014/141926 A;
Patent document 3: JP 6 336 385 B.

JP 2017 095287 discloses a recycling method of dihydrate gypsum from waste gypsum boards comprising:calcining gypsum derived from waste gypsum boards, dropping/adding the gypsum granules after calcination into water in order to mix the gypsum granules with water for preparing gypsum slurry and crystallizing dihydrate gypsum particles in said gypsum slurry.

### Summary of the Invention

### Problems to be Solved by the Invention

The present inventors have noticed a foam layer covering the slurry surface is generated when gypsum granules are dropped into water for preparing the gypsum slurry. The foam includes a large quantity of gypsum and prevents uniform dispersion of gypsum into the slurry. Therefore, the particle growth of gypsum is hindered and aggregated particles of gypsum are included in the dihydrate gypsum particles. These facts make the quality of dihydrate gypsum lower. Further, the foam causes cavitation in a slurry pump so that the feeding of the slurry is made not uniform.

The object of the invention is to reduce the foaming when gypsum granules are dropped into water so that the gypsum granules are promptly dispersed in the slurry.

### Means for Solving the Problem

A recycling method of dihydrate gypsum from waste gypsum boards according to the invention comprises:
calcining gypsum derived from waste gypsum boards in order to convert gypsum into hemihydrate and/or anhydrous type III gypsum granules;
dropping the gypsum granules after calcination into water in order to mix the gypsum granules with water for preparing gypsum slurry; and
crystalizing dihydrate gypsum particles in said gypsum slurry.

The invention is characterized in that the temperature of the gypsum granules just before dropped into water is made 90 °C or higher.

The dispersion of gypsum granules into water is remarkably different according to whether the gypsum granule temperature just before dropped is at least 90 °C or less than 90°C. At 90 °C or higher, the gypsum granules sink promptly and disperse uniformly (see Table 1). In addition, the foaming is little, dihydrate gypsum particles grow enough, and no aggregated particles are caused in the dihydrate gypsum particles.

On the contrary, at a temperature less than 90 °C, gypsum granules float on the liquid surface (see Table 1), and air gradually released from gypsum granules cause foam on which gypsum granules adhere. The foam causes cavitation in a slurry pump and makes the supply of the slurry unstable. Further, since the gypsum granules are prevented from dispersing in the water uniformly, the particle growth of dihydrate gypsum is made slow, and aggregated particles containing dihydrate gypsum or the like are generated. Dihydrate gypsum particles not fully grown include larger quantity of adhesion water, and energy efficiency for producing gypsum boards from the recycled dihydrate gypsum is lowered. The aggregate particles contained in the recycled gypsum hinder the production of uniform gypsum slurry for producing gypsum boards.

Preferably, the gypsum granules are dropped into water without pulverization after said calcination. When gypsum granules are further pulverized after calcination, the particle size is made smaller, and air in the granules is easily substituted by water. This reduces the foaming, even if the temperature when dropping is lower. However, according to the invention, the gypsum temperature just before dropped is made 90 °C or higher in order to prevent the foaming, and the fine pulverization after calcination is not needed.

Further preferably, the temperature of the gypsum granules just before dropped into water is kept at 90 °C or higher by residual heat when calcined. Since no further pulverization is made after calcination, the prompt dropping of gypsum granules from the calcining machine into water allows maintaining the gypsum temperature just before dropped at 90 °C or higher only with the residual heat.

### Brief Description of the Drawings

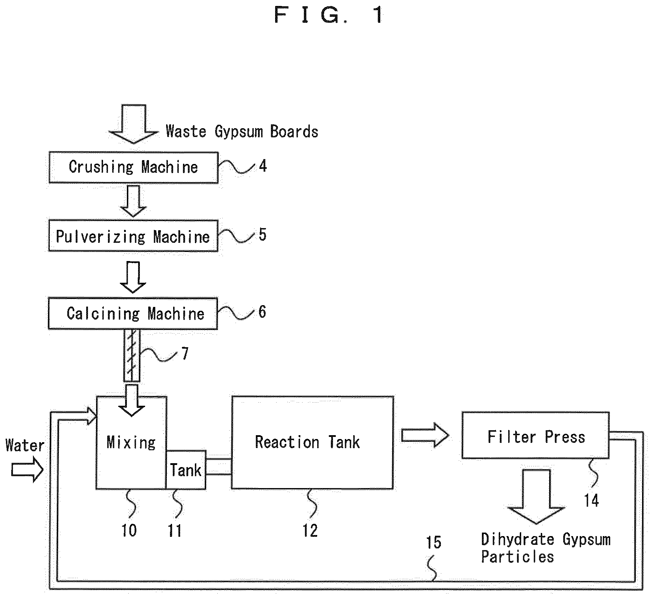

[Fig. 1] A process diagram indicating a recycling method of dihydrate gypsum according to an embodiment.

### Detailed Description for Carrying out the Invention

An embodiment for carrying out the invention will be described in the following. The scope of the invention shall be construed according to the claims, in consideration with the specification and well-known art, as ordinary technicians in the art understand.

### Embodiment

A recycling method of dihydrate gypsum according to an embodiment is described in Fig. 1. Waste gypsum boards are crushed by a crushing machine 4 into board pieces. The board pieces are pulverized by a pulverizing machine 5 to gypsum granules, for example, having an average particle size of 0.5 to 20 mm and preferably having an average particle size of 1 to 10 mm. When the average particle size is too large, the solution and dispersion of gypsum granules into slurry become slow. Too small average particle sizes do not cause troubles but make the pulverization cost larger. After the pulverization by the pulverizing machine 5, board paper pieces and gypsum granules become separable, for example, by a wind shifter, and therefore preferably, the board paper pieces are separated from gypsum granules.

When the average particle size of the gypsum granules is made smaller, the foaming when dropped into a mixing tank is reduced. However, when gypsum granules having a temperature of 90 °C or higher is dropped into the mixing tank, the foaming is almost completely prevented, and therefore, the fine pulverization is not necessary. The average particle size of gypsum granules can be measured by sieving the granules with plural sieves having different aperture sizes and obtaining the particle size distribution.

The pulverized gypsum granules are heated, for example, to a temperature from 130 °C to 160 °C, including the lower limit and the upper limit, by a calcining machine 6 and are converted into hemihydrate gypsum and/or anhydrous type III gypsum. The calcining temperature is more generally from 100 °C to 200 °C, including the lower limit and the upper limit, and is preferably from 110 °C to 160 °C, including the lower limit and the upper limit. The calcining period is, for example, from 2 minutes to 60 minutes, including the upper and lower limits, and is preferably from 5 minutes to 30 minutes, including the upper and lower limits. The heating method is arbitrary such as a hot wind method, a heat conduction method, and an infra-red radiation method. The calcination does not change the morphology of gypsum granules, and therefore, the average particle size of gypsum granules after pulverization is the same to the average particle size of gypsum granules when dropped into the slurry.

The calcined gypsum granules is dropped into a mixing tank 10 by a transferring device, such as a screw conveyor 7, without cooling and with keeping the temperature of the gypsum granules at 90 °C or higher. Arbitrary transferring devices may be usable and air transfer or the like may be possible. However, since small heat loss during the transfer is preferable, screw conveyor 7 or the like is preferable in this regard. While not advantageous in the energy efficiency, the calcined gypsum granules may be stored once and then may be re-heated before dropped into the mixing tank 10.

The temperature of gypsum just before dropped into the mixing tank means the temperature just before the outlet of the screw conveyor 7 (just before the inlet into the mixing tank 10), and it was measured with piercing a thermistor into gypsum. In place of the thermistor, a thermocouple and an infra-red ray temperature meter are usable. Since the temperature decrease between a position just before the outlet of the screw conveyor and falling into the mixing tank 10 is negligible, and therefore, the measured temperature indicates the temperature of gypsum granules when dropped into the slurry.

The structure of the mixing tank 10 is arbitrary and, in the embodiment, one described in Patent Document 3 (JP6336385B) was used. Into the mixing tank 10, filtrate from a filter press 14 which will be described later and usual water were fed at a temperature of 60 °C, and the slurry temperature in the mixing tank 10 was about 60 °C. Preferable slurry temperature is generally from 40 °C to 80 °C, including the upper and lower limits. When the gypsum granules were dropped at a temperature of 90 °C or higher, the dropped gypsum granules into the mixing tank 10 sank and dispersed in the slurry without foaming.

When the temperature of gypsum granules just before dropped was 80 °C or lower, it was observed that a foam layer was generated on the surface of the mixing tank 10 and that the foam included the gypsum granules. This made the dispersion of the gypsum granules into the slurry not uniform. Further, the foam made the slurry flow by a slurry pump 11 unstable and, as a result, the continuous reaction process easily became unstable.

The gypsum slurry is fed from the mixing tank 10 by a slurry pump 11 with pressure into a reaction tank 12, the slurry is kept at, for example, 60 °C under stirring in order to crystalize dihydrate gypsum particles. The reaction tank 12 may be one stage or multi-stage. The dihydrate gypsum particles crystalized in the reaction tank 12 are separated by a solid-liquid separation device such as a filter press 14, and the filtrate is fed for example into the mixing tank 10 through a feedback route 15. In addition, the lost water with dihydrate gypsum particles is compensated through the feedback route 15. In the embodiment, the mixing tank 10 and the reaction tank 12 are provided separately. However, a single reaction tank merging them may be provided and the gypsum granules may be dropped into the reaction tank.

When dropped at a temperature of 90 °C or higher, the gypsum granules dissolve in the slurry uniformly, and the dihydrate gypsum particles extracted by the filter press 14 do not contain aggregated particles and are fully grown. On the contrary, when the temperature just before dropped is 80 °C or lower, the extracted dihydrate gypsum particles include aggregated particles and the particle growth of the dihydrate gypsum is not enough. The aggregated particles make the preparation of uniform gypsum slurry difficult when producing gypsum boards. Further, the dihydrate gypsum is converted to hemihydrate gypsum or the like before producing gypsum boards. The larger average particle size of dihydrate gypsum makes the adhered water content smaller and also makes the energy necessary for the conversion into the hemihydrate gypsum or the like smaller.

### Embodiment 1

Dihydrate gypsum waste having an average particle size of 2 mm resultant from crushing and pulverizing waste gypsum boards were heated at a temperature of 130°C by a hot wind drier and converted into hemihydrate gypsum. The hemihydrate gypsum was dropped at a rate of 100g/hr and water at a temperature of 60°C was dropped at a rate of 200 mL/hr into gypsum slurry of 3000 mL having a concentration of 40 mass%. The slurry was always stirred and kept at 60°C. In the embodiment, the hemihydrate gypsum before dropped was warmed and the temperature just before dropped into the slurry was kept at 105°C. The dropping of gypsum caused nearly no foaming and the hemihydrate gypsum was promptly dispersed in the slurry.

The feeding of hemihydrate gypsum and water was continued for 40 hours, and then, the slurry was extracted and filtered to separate crystalized dihydrate gypsum particles. By laser photo-scattering method, the volume-averaged particle size of dihydrate gypsum particles was measured as 73 *µ* m, and no aggregated particles was observed in the slurry through a microscope.

### Comparative Example 1

Hemihydrate gypsum cooled at room temperature was dropped into the slurry. Except for this, dihydrate gypsum particles were crystalized in the same way to the embodiment 1. When dropping the hemihydrate gypsum, the liquid surface was covered with a foam layer having a thickness of about 5 mm and the foam included a large amount of gypsum granules. The slurry was extracted after 40 hours from starting the supply, the average particle size of the crystalized dihydrate gypsum was 41 *µ* m, and aggregated gypsum particles were observed in the slurry.

### Comparative Example 2

Hemihydrate gypsum whose temperature just before dropped was kept at 80°C. Except for this, dihydrate gypsum particles were crystalized in the same way to the embodiment 1. Also in this case, when dropping the hemihydrate gypsum, the liquid surface was covered with a foam layer having a thickness of about 5 mm. The average particle size of the crystalized dihydrate gypsum was 43 *µ* m after 40 hours from starting the supply, and aggregated gypsum particles were observed in the slurry.

The relation between the temperatures of gypsum pieces and periods till they sank was measured with various gypsum temperatures just before dropped and various water temperatures. Gypsum board waste was heated to 130°C for converting into hemihydrate gypsum, cubic pieces having each edge of about 10 mm and a weight of 0.6 g were cut with a cutter-knife. These cubes were re-heated and dropped into a beaker containing water of 200 mL and the periods till the cubes sank in the water were observed. The results are shown in Table 1.

**Table 1**

| Gypsum Temperature just before Dropped and Period till Sinking (second) | | | |
|---|---|---|---|
| Gypsum Temperature *1 | Water Temperature | | |
| | Room Temperature | 60°C | 80 °C |
| Room Temperature | > 600s | > 600s | > 600s |
| 60 °C | > 600s | > 600s | > 600s |
| 80°C | > 600s | > 600s | 580s |
| | | | |
| 90°C | 115s | 12s | 5s |
| 100°C | 13s | 5s | 4s |
| 120°C | 9s | 5s | 4s |
| 140°C | 9s | 4s | 4s |

| | | | |
|---|---|---|---|
| *1 gypsum temperature is that just before dropped into water. | | | |

Since the true specific gravity of hemihydrate gypsum is about 2, gypsum particles are expected to sink in water. However, when the temperature of gypsum was 80 °C or under, gypsum was floating on the liquid surface for 10 minutes or more without sinking. This indicates air in porous hemihydrate gypsum was very slowly substituted by water. In addition, this agrees with that dropped gypsum granules floated on the slurry surface and that air in the gypsum granules was gradually released and formed the foam.

On the contrary, when the temperature of hemihydrate gypsum just before dropped was at 90°C or higher, the gypsum pieces sank promptly in the water. In the experiment, when the gypsum temperature was 90°C and water was at room temperature, nearly 2 minutes was necessary before sinking. However, in industrial processes, hemihydrate gypsum or the like are dropped into warmed gypsum slurry, for example at 60°C, and the period before sinking is shorter.

If gypsum granules release air and sink in the slurry promptly, the foam is made fewer, and therefore, gypsum granules disperse promptly in the slurry without forming the aggregated particles. Then, the dihydrate gypsum particles grow enough to a larger average particle size. The substantial difference in dispersion between at 90 °C or higher and at 80 °C or under may be related to that air in the gypsum granules is cooled and contracted by the slurry and invites water into the gypsum granules, that the surface tension between the gypsum granules and water is dependent upon temperatures, or other factors. However, the detailed mechanism is not clear.

### Description of Symbols

- 4: crushing machine
- 5: pulverizing machine
- 6: calcining machine
- 7: screw conveyor
- 10: mixing tank
- 11: slurry pump
- 12: reaction tank
- 14: filter press
- 15: feedback route

## Claims

1. A recycling method of dihydrate gypsum from waste gypsum boards comprising:
calcining gypsum derived from waste gypsum boards in order to convert gypsum into hemihydrate and/or anhydrous type III gypsum granules;
dropping the gypsum granules after calcination into water in order to mix the gypsum granules with water for preparing gypsum slurry; and
crystalizing dihydrate gypsum particles in said gypsum slurry,
said method being **characterized in that** temperature of the gypsum granules just before dropped into water is made 90 °C or higher.

2. The recycling method of dihydrate gypsum from waste gypsum boards according to claim 1,
being **characterized in that** the gypsum granules are dropped into water without pulverization after said calcination.

3. The recycling method of dihydrate gypsum from waste gypsum boards according to claim 2,
being **characterized in that** the temperature of the gypsum granules just before dropped into water is kept at 90°C or higher by residual heat when calcined.

## Patentansprüche

1. Recyclingverfahren für Dihydratgips aus Abfall-Gipsplatten, aufweisend:
Kalzinieren von Gips, der aus Abfall-Gipsplatten gewonnen wurde, um Gips in Halbhydrat- und/oder Anhydrat-Klasse-III-Gipskörner umzuwandeln;
Tauchen der Gipskörner in Wasser nach dem Kalzinieren, um die Gipskörner mit Wasser zu mischen, um eine Gipsaufschlämmung herzustellen; und
Kristallisieren von Dihydrat-Gipspartikeln in der Gipsaufschlämmung,
wobei das Verfahren **dadurch gekennzeichnet ist, dass** die Temperatur der Gipskörner kurz vor dem Tauchen in Wasser auf 90 °C oder mehr eingestellt wird.

2. Recyclingverfahren für Dihydratgips aus Abfall-Gipsplatten nach Anspruch 1, **dadurch gekennzeichnet, dass** die Gipskörner nach der Kalzinierung ohne Pulverisierung in Wasser getaucht werden.

3. Recyclingverfahren für Dihydratgips aus Abfall-Gipsplatten nach Anspruch 2, **dadurch gekennzeichnet, dass** die Temperatur der Gipskörner kurz vor dem Tauchen in Wasser durch Restwärme bei 90 °C oder mehr gehalten wird, wenn sie kalziniert werden.

## Revendications

1. Procédé de recyclage de gypse dihydraté à partir de plaques de gypse usées comprenant :
la calcination de gypse dérivé de plaques de gypse usées afin de convertir du gypse en granulés de gypse de type III hémihydraté et/ou anhydre ;
la chute des granulés de gypse après calcination dans de l'eau afin de mélanger les granulés de gypse avec de l'eau pour préparer une suspension de gypse ; et
la cristallisation de particules de gypse dihydraté dans ladite suspension de gypse,
ledit procédé étant **caractérisé en ce que** la température des granulés de gypse juste avant la chute dans l'eau est de 90°C ou supérieure.

2. Procédé de recyclage de gypse dihydraté à partir de plaques de gypse usées selon la revendication 1,
étant **caractérisé en ce que** les granulés de gypse chutent dans de l'eau sans pulvérisation après ladite calcination.

3. Procédé de recyclage de gypse dihydraté à partir de plaques de gypse usées selon la revendication 2,
étant **caractérisé en ce que** la température des granulés de gypse juste avant la chute dans de l'eau est maintenue à 90°C ou supérieure par de la chaleur résiduelle lorsqu'ils sont calcinés.
